# EUROPÄISCHE PATENTSCHRIFT

(11) **EP 2 951 909 B1**
(45) Veröffentlichungstag und Bekanntmachung des Hinweises auf die Patenterteilung: **02.03.2022**
(21) Anmeldenummer: 14701793.3
(22) Anmeldetag: 31.01.2014
(51) Int. Cl.: H02K 19/14, H02K 15/00, H02K 19/06

(54) **ROTOR, RELUKTANZMASCHINE UND HERSTELLUNGSVERFAHREN FÜR DEN ROTOR**
ROTOR, RELUCTANCE MACHINE AND PRODUCTION METHOD FOR A ROTOR
ROTOR, MOTEUR À RÉLUCTANCE ET PROCÉDÉ DE FABRICATION D'UN ROTOR

(30) Priorität: 01.02.2013 DE 102013201694
(43) Veröffentlichungstag der Anmeldung: 09.12.2015
(73) Patentinhaber: KSB SE & Co. KGaA, 67227 Frankenthal (DE)
(72) Erfinder: HAUSSMANN, Meike, 67227 Frankenthal (DE); KANOFFSKY, Florian, 67227 Frankenthal (DE); MÜLLER, Martin, 67227 Frankenthal (DE); MUNTZ, Timo, 67227 Frankenthal (DE); SCHAAB, Jochen, 67227 Frankenthal (DE)
(86) Internationale Anmeldenummer: PCT/EP2014/051901
(87) Internationale Veröffentlichungsnummer: WO 2014/118321

(56) Entgegenhaltungen:
- DE-A1-102005 062 922
- JP-A- 2000 197 325
- US-A1- 2003 173 861
- US-A1- 2003 184 185
- US-A1- 2010 011 806

## Beschreibung

Die Erfindung betrifft einen Rotor für eine Reluktanzmaschine umfassend ein zylinderförmig aufgebautes weichmagnetisches Element, wobei das weichmagnetische Element Aussparungen zur Ausbildung von magnetischen Flusssperren aufweist, wobei sich die Flusssperren jeweils im wesentlichen bogenförmig symmetrisch um die q-Achse eines Polsegments des Rotors erstrecken, wobei alle oder ein Teil der Flusssperren durch ein oder mehrere Stege geteilt sind, wobei der Verlauf der einzelnen Stege einen geschlossenen Linienzug bildet, welcher den Rotor in radialer Richtung in einen inneren und einen äußeren Rotorbereich unterteilt.

Üblicherweise werden Rotoren für Synchronreluktanzmaschinen mit einem zylinderförmigen weichmagnetischen Element ausgestattet, das koaxial auf der Rotorachse angeordnet wird. Zur Ausbildung mindestens eines Polpaares bzw. Lückenpaares umfasst das weichmagnetische Element Flussleit- sowie Flusssperrabschnitte, die sich gegenseitig in einer unterschiedlich stark ausgeprägten magnetischen Permeabilität unterscheiden. Der Abschnitt mit großer magnetischer Leitfähigkeit wird bekannter Weise als d-Achse des Rotors und der Abschnitt mit vergleichsweise geringerer Leitfähigkeit als q-Achse des Rotors gekennzeichnet. Ein optimaler Wirkungsgrad des Reluktanzmotors und damit eine optimale Drehmomentausbeute stellt sich dann ein, wenn die d-Achse eine möglichst große magnetische Leitfähigkeit und die q-Achse eine möglichst niedrige magnetische Leitfähigkeit aufweist.

Erreicht wird diese Voraussetzung oftmals durch die Ausbildung von mehreren mit Luft gefüllten Aussparungen im weichmagnetischen Element entlang der q-Achse, wodurch der magnetische Fluss in Richtung der q-Achse gehemmt wird und folglich die Permeabilität sinkt. Das so aufgebaute weichmagnetische Element wird anschließend auf einer Rotorwelle aufgebracht und axial sowie tangential fixiert.

Aus Stabilitätsgründen werden ein oder mehrere Flusssperren durch radial orientierte innere Stege zweigeteilt. Die Steganordnung erhöht die Festigkeit des Blechpaketes, was insbesondere die Rotorstabilität im Betrieb optimiert. Die Breite der Stege ist gering, um den Einfluss auf die Permeabilität so gering wie möglich zu halten.

Synchronreluktanzmotoren werden regelmäßig über einen Frequenzumrichter gespeist, wodurch sich die Drehzahl von 0 bis zur Betriebszahl hochführen und während des Betriebs verstellen lässt. Insbesondere kann die Drehzahl zum Anlaufen des Motors schrittweise erhöht werden. Wird der Synchronreluktanzmotor hingegen am starren Netz betrieben, ist der Einsatz eines Anlaufkäfigs erforderlich, um einen asynchronen Anlauf zu ermöglichen. Sobald sich die Drehzahl des Rotors der synchronen Drehzahl annähert, überwiegt das Reluktanzmoment und der Rotor läuft synchron mit dem umlaufenden Drehfeld.

Der Aufbau des verwendeten Anlaufkäfigs entspricht den Ausführungen bei Standard Asynchronmaschinen. Der Käfig besteht aus einzelnen Leiterstäben, die endseitig kurzgeschlossen sind. Die Befestigung des Anlaufkäfigs am Rotor erfolgt über zusätzliche Aussparungen im Rotorblechpaket. Der Aufbau sowie die Herstellung eines derartigen Rotors ist jedoch vergleichsweise aufwendig.

Die US 2010/011806 A1 offenbart einen Permanentmagnet-Line-Start-Motor mit einem speziellen Anlaufkäfigdesign.

Die DE 10 2005 062922 A1 offenbart einen Synchronreluktanzmotor, der keinen Anlaufkäfig aufweist und somit nicht am starren Netz anlaufen kann.

Die US 2003/173861 A1 und die US 2003/184185 A1 zeigen Herstellverfahren zum Herstellen von Synchronreluktanzmotoren.

Die JP 2000 197325 A offenbart einen Rotor für eine Reluktanzmaschine gemäß dem Oberbegriff des Anspruchs 1.

Aufgabe der vorliegenden Erfindung ist es, einen Rotor für eine Reluktanzmaschine derart weiterzubilden, so dass die oben genannten Nachteile überwunden werden.

Diese Aufgabe wird durch einen Rotor für eine Reluktanzmaschine gemäß den Merkmalen des Anspruchs 1 gelöst. Weitere vorteilhafte Ausführungen des Rotors sind Gegenstand der abhängigen Ansprüche.

Gemäß Anspruch 1 wird also ein Rotor für eine Reluktanzmaschine vorgeschlagen, bei dem mehrere Flusssperren des äußeren Rotorbereichs mit einem elektrisch leitfähigen und magnetisch nicht leitfähigen Füllmaterial gefüllt sind und stirnseitig am Rotor jeweils ein Kurzschlussring angeordnet ist, wobei die Kurzschlussringe wenigstens zwei der Flusssperren des äußeren Rotorbereichs kurzschließen.

In einer bevorzugten Ausführungsform des erfindungsgemäßen Rotors ist das weichmagnetische Element als Blechpaket ausgeführt, das - wie aus dem Stand der Technik bekannt - aus mehreren in axialer Richtung des Rotors aufeinandergestapelter Bleche aufgebaut ist, die gegeneinander isoliert sind. Diese Bauweise verhindert das Auftreten von Wirbelströmen im weichmagnetischen Element. Erfindungsgemäß sind alle oder ein Teil der Flusssperren durch ein oder mehrere Stege geteilt. Die Anordnung der Stege hat zum Einen den Zweck, dem Rotor zusätzliche Stabilität, insbesondere in radialer Richtung, zu verleihen. Zum anderen wird der Rotor erfindungsgemäß in einen inneren sowie äußeren Rotorbereich unterteilt. Der Verlauf der einzelnen Stege bildet einen geschlossenen Linienzug, welcher den Rotor in radialer Richtung in einen inneren und einen äußeren Rotorbereich unterteilt.

Idealerweise zeigen die angeordneten Flusssperren keinen bereichsübergreifenden Verlauf, das heißt keine der Flusssperren übertritt die Grenzlinie zwischen innerem und äußerem Rotorbereich. Das Verbot des bereichsübergreifenden Verlaufs bezieht sich auf zusammenhängende Flusssperrensegmente. Eine Flusssperre, die durch einen Steg geteilt ist, kann demgegenüber bereichsübergreifend angeordnet sein.

Die Separierung des Rotors in einen inneren sowie äußeren Bereich beeinflusst und optimiert das Anlaufverhalten des Rotors. Beim Rotoreinsatz in einer Reluktanzmaschine kann auf den Einsatz eines Frequenzumrichters verzichtet werden, d.h. die erfindungsgemäße Rotorkonstruktion ermöglicht den asynchronen Rotoranlauf bei Anlegen eines Drehstroms mit konstanter Frequenz.

Insbesondere dient die Ausgestaltung des äußeren Rotorbereichs zur Generierung einer Art Anlaufkäfig, deren Wirkweise im wesentlichen der eines Anlaufkäfigs für Standard-Asynchronmaschinen entspricht. Zusätzliche Vorkehrungen, die bisher für derartige Rotoren zur Realisierung des Anlaufkäfigs notwendig waren, sind unnötig. Die Produktion, Herstellung und der Betrieb des erfindungsgemäßen Rotors vereinfacht sich spürbar. Insbesondere kann durch den äußeren Rotorbereich wenigstens ein Leiterstab eines Anlaufkäfigs nachgebildet werden. Erfindungsgemäß bilden die im äußeren Rotorbereich liegenden Teile der Flusssperren Teile des Anlaufkäfigs. Erfindungsgemäß ist jeder Teil des derart nachgebildeten Anlaufkäfigs Teil einer Flusssperre, mit Ausnahme der Kurzschlussringe, welche nicht Teil des Rotoraktivteils sind.

Durch den erfindungsgemäßen Rotorblechschnitt ist es daher ermöglicht, unter Verwendung von identischen Rotorblechen je nach Anwendungsfall sowohl eine am starren Netz anlaufende Synchronreluktanzmaschine mit Anlaufkäfig als auch eine frequenzumrichterbetriebene Synchronreluktanzmaschine ohne Anlaufkäfig herzustellen.

In einer vorteilhaften Ausführungsform sind die Stege nicht oder nur teilweise in radialer Richtung orientiert. Durch geeignete Ausrichtung der Stege kann eine beliebige Unterteilung der Rotorbereiche erfolgen.

Insbesondere ist die Form bzw. der konkrete Verlauf der Stegführung variabel. Sinnvoll ist ein kreisförmiger Verlauf der Stegführung, so dass sich ein ringförmiger innerer und/oder äußerer Rotorbereich ergibt.

Denkbar ist auch eine alternative Stegführung, bei dem sich ein rechteckiger bzw. viereckiger innerer Rotorbereich ergibt. Der äußere Rotorbereich wird durch die aussen liegenden Rotorflächen gebildet. Zudem besteht die Möglichkeit, dass sich der innere Bereich abschnittsweise an den Außenumfang des Rotors annähert bzw. an diesen angrenzt. Idealerweise weist der innere Rotorbereich eine im wesentlichen kreisartige Form auf, die abschnittsweise, insbesondere im Bereich der q-Achse, an den Außenumfang des Rotors angrenzt.

Der Rotor weist vorteilhafterweise eine geradzahlige Polanzahl auf, insbesondere zwei, vier, sechs oder acht Pole. Die Anordnung der einzelnen Flusssperren entspricht im wesentlichen der technischen Lehre der US Patentschrift US 5,818,140. Der Rotor der US 5,818,140 weist wie der Rotor der Erfindung als elektromagnetisch wirksame Elemente alleine Flusssperren auf, die gegebenfalls noch ganz oder teilweise mit Permanentmagneten gefüllt sind. In jedem Fall besitzt ein solcher Rotor einen reinen Flusssperrenschnitt ohne jegliche zusätzliche elektromagnetisch wirksame Elemente. Diese Flusssperren erstrecken sich jeweils im wesentlichen bogenförmig symmetrisch um die q-Achse eines Polsegments des Rotors. Gegenüber der in der US 5, 818,140 offenbarten technischen Lehre unterscheidet sich der erfindungsgemäße Gegenstand jedoch durch die erfindungsgemäße Stegführung, die den Rotor in einen äußeren sowie inneren Rotorbereich unterteilt.

Ein oder mehrere Flusssperren können zumindest teilweise mit einem paramagnetischen oder diamagnetischen Füllmaterial ausgefüllt sein. Üblich war bisher die Füllung der einzelnen Flusssperren mit Luft. Verbesserte Rotoreigenschaften ergeben sich jedoch, wenn ein oder mehrere Flusssperren mit geeigneten Materialien ausgefüllt sind, die gegenüber Luft bessere paramagnetische bzw. diamagnetische Eigenschaften aufweisen.

Geeignete Materialien umfassen beispielsweise ein Metalloxid und/oder Aluminium und/oder eine Aluminiumlegierung und/oder Kupfer und/oder eine Kupferlegierung und/oder Kunststoff und/oder Keramik und/oder ein Textil und/oder Holz. Denkbar ist auch ein Gemisch aus zwei oder mehreren der genannten Komponenten. Idealerweise sind beide Rotorbereiche, das heißt die Flusssperren beider Rotorbereiche mit entsprechenden Füllmaterialien ausgefüllt. Allerdings sei darauf hingewiesen, dass dies keine notwendige Bedingung für den erfindungsgemäßen Einsatz des Rotors darstellt. Es ist ebenso denkbar, dass nur der innere oder nur der äußere Bereich mit einem entsprechenden Füllmaterial gefüllt ist.

Die beiden Rotorbereiche müssen nicht zwingend mit demselben Füllstoff gefüllt sein. Besonders bevorzugt sind ein oder mehrere Flusssperren des äußeren Rotorbereichs mit Aluminium bzw. eine Aluminiumlegierung beinhaltendem Füllmaterial gefüllt. Eine derartige Füllung der äußeren Flusssperren weist eine ausreichende Leitfähigkeit auf, so dass die üblichen Leiterstäbe eines Anlaufkäfigs nachgebildet werden.

Erfindungsgemäß sind dabei mehrere Flusssperren des äußeren Rotorbereichs mit einem elektrisch leitfähigen und magnetisch nicht leitfähigen Füllmaterial, insbesondere mit Aluminium bzw. eine Aluminiumlegierung beinhaltendem Füllmaterial, gefüllt und zumindest eine Flusssperre, vorzugsweise eine Mehrzahl der Flusssperren, idealerweise alle Flusssperren, des inneren Rotorbereichs ist bzw. sind nicht mit diesem Füllmaterial gefüllt. Dabei können ein oder mehrere Flusssperren des inneren Rotorbereichs überhaupt nicht gefüllt sein, also Luft beinhalten, oder mit einem anderen Füllmaterial, insbesondere mit einem elektrisch und magnetisch nicht leitfähigen Füllmaterial, wie beispielsweise Kunststoff, Keramik, Textilien oder Holz und jegliche Gemische daraus, gefüllt sein.

Nach einer weiteren Ausgestaltung sind ein oder mehrere Flusssperren des inneren Rotorbereichs ganz oder teilweise mit permanentmagnetischem Material gefüllt. Damit wird der Wirkungsgrad und der Leistungsfaktor der elektrischen Maschine verbessert.

Die Einbringung der Füllmaterialien kann als Feststoff erfolgen, der in die entsprechenden Ausnehmungen des Rotorblechpaketes eingesetzt wird. Alternativ kann die Befüllung ein oder mehrerer Flusssperren per Guss-, insbesondere Spritzgussverfahren erfolgen.

Die Erfindung betrifft des weiteren eine Reluktanzmaschine, insbesondere eine Synchronreluktanzmaschine, mit wenigstens einem Rotor gemäß der vorliegenden Erfindung bzw. einer vorteilhaften Ausgestaltung der vorliegenden Erfindung. Die Vorteile und Eigenschaften der erfindungsgemäßen Reluktanzmaschine entsprechen offensichtlich denen des erfindungsgemäßen Rotors bzw. denen einer der vorteilhaften Ausgestaltungen des erfindungsgemäßen Rotors. Aus diesem Grund soll auf eine wiederholende Beschreibung verzichtet werden.

Die erfindungsgemäßen Eigenschaften des verwendeten Rotors führen nun dazu, dass der Betrieb der Reluktanzmaschine auch ohne Frequenzumrichter am starren Drehstromnetz erfolgen kann. Die Ausgestaltung des äußeren Rotorbereichs dient zum Aufbau eines Anlaufkäfigs, so dass der Rotor ohne Frequenzumrichter angefahren und in eine synchrone Rotationsbewegung versetzt werden kann. Beispielsweise werden über den erfindungsgemäßen äußeren Rotorbereich ein oder mehrere Leiterstäbe nachgebildet, wobei der äußere Rotorbereich in Kombination mit stirnseitig am Rotor angeordneten Kurzschlussringen einen Anlaufkäfig bildet.

Nicht Teil der Erfindung ist ein Verfahren zur Herstellung eines Rotors gemäß der vorliegenden Erfindung bzw. einer vorteilhaften Ausgestaltung der Erfindung. Dabei ist vorgesehen, dass zumindest ein Teil der Flusssperren im Rotorpaket zumindest teilweise per Guss mit einem paramagnetischen und/oder diamagnetischen Medium gefüllt wird. Der herzustellende Rotor weist einen inneren sowie äußeren Rotorbereich auf.

Weiter nicht zur Erfindung gehörend wird der nicht zu befüllende Rotorbereich mit einer axialen Kraft beaufschlagt. Dies hat zur Folge, dass durch das Befüllen der Flusssperren des zu befüllenden Rotorbereichs ein Eindringen des Füllmediums in die Flusssperren des nicht zu füllenden Rotorbereichs verhindert wird. Beispielsweise sollen die Flusssperren des äußeren Rotorbereichs mit einem paramagnetischen bzw. diamagnetischen Medium gefüllt werden. In diesem Fall wird auf den inneren Rotorbereich eine axiale Kraft, das heißt eine Kraft in Richtung der Rotordrehachse aufgebracht, so dass das eingegossene Material nicht in die Flusssperren des inneren Rotorbereichs gelangen kann.

Die axiale Kraft kann abwechselnd auf den inneren bzw. äußeren Rotorbereich aufgebracht werden, um eine Füllung der Flusssperren mit unterschiedlichen Materialien zu ermöglichen.

Weiter nicht zur Erfindung gehörend wird zur Aufbringung der axialen Kraft ein geeignetes Spannwerkzeug verwendet, das einseitig oder beidseitig auf die Stirnseiten der zylindrischen Rotorform einwirkt. Idealerweise entspricht die Auflagefläche des Spannwerkzeugs annähernd bzw. exakt der geometrischen Abmessung des nicht zu befüllenden Rotorbereichs.

Sollen unterschiedliche Füllmaterialien in die Flusssperren des inneren bzw. äußeren Rotorbereichs eingebracht werden, können unterschiedliche Spannwerkzeuge zur Verfügung stehen, die jeweils eine axiale Kraft auf den inneren und nachfolgend auf den äußeren Rotorbereich aufbringen können. Die Auflageflächen der Spannwerkzeuge entsprechen idealer Weise der geometrischen Abmessung des inneren bzw. äußeren Rotorbereichs.

Weitere Vorteile und Eigenschaften der Erfindung sollen im folgenden anhand der in den Figuren dargestellten Ausführungsbeispiele näher erläutert werden. Es zeigen:
- Fig. 1:: ein Rotorblech für den erfindungsgemäßen Rotor in einer ersten Ausführungsform,
- Fig. 2:: ein Rotorblech für den erfindungsgemäßen Rotor gemäß einer zweiten Ausführungsform,
- Fig. 3:: ein Rotorblech des erfindungsgemäßen Rotors gemäß einer weiteren Ausführungsform,
- Fig. 4, 5:: Rotorbleche des erfindungsgemäßen Rotors gemäß weiteren Ausführungsformen mit Permanentmagneten und
- Fig. 6:: ein Rotorblech des erfindungsgemäßen Rotors gemäß einer weiteren Ausführungsform.

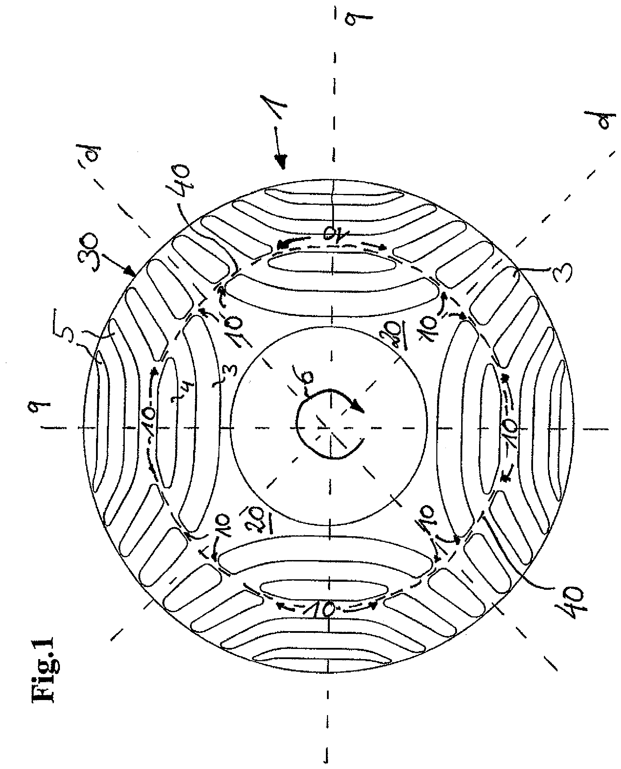

Die Figuren 1 bis 3 zeigen eine Draufsicht auf unterschiedliche Rotorbleche 1, die für den Aufbau eines erfindungsgemäßen Rotors in axialer Richtung, d.h. entlang der Rotationsachse 6 aufeinander gestapelt werden. Zur Vereinfachung der Darstellung ist der Stator nicht abgebildet. Das Rotorblech 1 verfügt über mehrere Aussparungen 3, 4, 5, die die Funktion von Flusssperren übernehmen und durch deren Anordnung ein vierpoliger Rotor gebildet wird, dessen magnetischer Fluss in den Bereichen mit den Flusssperren 3, 4, 5 gehemmt ist. Allgemein wird der Bereich mit hoher magnetischer Leitfähigkeit als d-Achse und der Bereich geringer magnetischer Leitfähigkeit als q-Achse gekennzeichnet.

Das zusammengesetzte Blechpaket wird auf einer nicht dargestellten Rotorwelle montiert.

Die Anordnung der einzelnen Flusssperren 3, 4, 5 entspricht im wesentlichen der technischen Lehre der US Patentschrift US 5,818,140.

Die erfindungsgemäße Rotorkonstruktion unterscheidet sich von dieser technischen Lehre allerdings in der Anordnung der einzelnen Stege 10, durch welche die einzelnen Flusssperren 3, 4, 5 in unterschiedliche Abschnitte unterteilt werden. Kennzeichnend ist, dass jeweils die beiden innen liegenden Flusssperren 3, 4 eines jeden Kreissektors durch jeweils zwei Stege 10 geteilt werden. Die Anzahl der innen liegenden Flusssperren ist jedoch nicht auf zwei begrenzt. Die Erfindung soll ebenfalls Ausführungsformen umfassen, die mehr oder weniger Flusssperren im inneren Bereich aufweisen. Die beiden aussen liegenden Flusssperren 5 weisen keinen Steg auf.

Die Anordnung der einzelnen Stege 10 sorgt nicht nur für eine verbesserte Blechstabilität während des Rotorbetriebs, sondern unterteilt zudem das Rotorblech 1 in einen inneren Teilbereich 20 sowie einen äußeren Teilbereich 30. Zur Verdeutlichung der Bereichsteilung ist die kreisförmige gestrichelte Linie 40 eingezeichnet, die den Grenzverlauf zwischen dem inneren und dem äußeren Rotorbereich 20, 30 darstellt. Durch den kreisförmigen Verlauf der einzelnen Stege 10 entsteht folglich ein innerer Rotorring 20 sowie ein äußerer Rotorring 30.

Die Geometrie der außen liegenden Magnetflusssperren 5 inklusive der inneren Stege 10 bildet zusammen mit zwei nicht dargestellten stirnseitig anordenbaren Kurzschlussringen einen Anlaufkäfig. Diese Kurzschlussringe können beispielsweise unverändert vom Anlaufkäfig einer Asynchronmaschine übernommen werden. Zusätzliche Vorkehrungen für einen Anlaufkäfig, wie die oftmals eingelassenen Metallstäbe, können nunmehr entfallen.

Die durch die so angeordneten Stege 10 entstehenden zwei separaten Bereiche 20, 30 des Blechs 1 können jeweils mit einem Füllmaterial gefüllt werden. Die Verwendung eines einheitlichen Füllstoffs für die Flusssperren beider Bereiche 20, 30 ist nicht notwendig. Vielmehr bietet sich der Einsatz unterschiedlicher Füllmaterialien an, um die Laufeigenschaften des Rotor gezielt optimieren zu können.

Als geeignetes Material sind Metalloxide, Aluminium, Aluminiumlegierungen, Kupfer, Kupferlegierungen, Kunststoff, Keramik, Textilien, Holz und jegliche Gemische daraus zu nennen. Grundsätzlich eignen sich jedoch sämtliche Arten von paramagnetischen bzw. diamagnetischen Stoffen.

Optimalerweise wird in die Flusssperren 5 des äußeren Bereichs 30 Aluminium bzw. eine Aluminiumlegierung eingebracht. Aufgrund der guten elektrischen Leitfähigkeit können daher einzelne Leiterstäbe zur Ausbildung eines Anlaufkäfigs nachgebildet werden. Diese die Leiterstäbe bildenden Flusssperren 5 des äußeren Rotorbereichs 30 werden durch stirnseitig am Rotor angeordnete Kurschlussringe kurzgeschlossen.

Die Einbringung dieser Füllmaterialien in die Flusssperren 3, 4 und 5 ist auf unterschiedliche Art und Weise möglich. Es bietet sich die Einbringung per Guss an.

Selbstverständlich können die Füllmaterialen auch als Feststoff in die Aussparungen 3, 4, 5 eingesetzt werden.

Beim Einfüllen des Füllmaterials per Guss wird eine axiale Kraft an das Rotorblech 1 angelegt, wodurch der nicht zu befüllende Rotorbereich zusammengepresst wird. Das Füllmaterial, das in die Flusssperren des zu befüllenden Rotorbereichs gegossen wird, kann hierdurch nicht in die Flusssperren des nicht zu befüllenden Rotorbereichs eindringen.

Eine geeignete Füllmaterialauswahl für den äußeren Bereich 30 des Rotorblechs 1 optimiert das Anlaufverhalten des Synchronreluktanzmotors. Idealerweise kann der Motor ohne einen Frequenzumrichter betrieben werden, da der äußere Bereich 30 als eine Art Anlaufkäfig agiert, dessen Wirkweise mit der Funktion eines bekannten Anlaufkäfigs für Drehstromasynchronmaschine vergleichbar ist.

Zur Aufbringung der axialen Kraft auf das Rotorpaket dient ein Spannwerkzeug, das eine der Stegführung angepasste Geometrie besitzt, beispielsweise ein kreisförmiges oder ein quadratisches Blech, das in Kontakt mit der Rotorstirnseite gebracht wird. Die geometrische Anpassung sorgt für eine optimale Angriffsfläche des Spannwerkzeugs zur Einbringung der gewünschten Axialkraft auf die nicht zu befüllende Rotorfläche. Idealerweise sollte das Spannwerkzeug möglichst den kompletten dafür vorgesehenen Bereich des Bleches 1 ausnutzen, um Spannungsspitzen und damit Verformungen zu vermeiden.

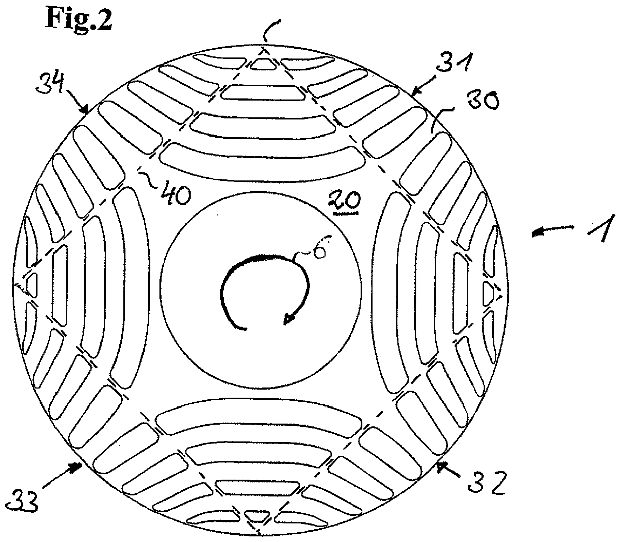

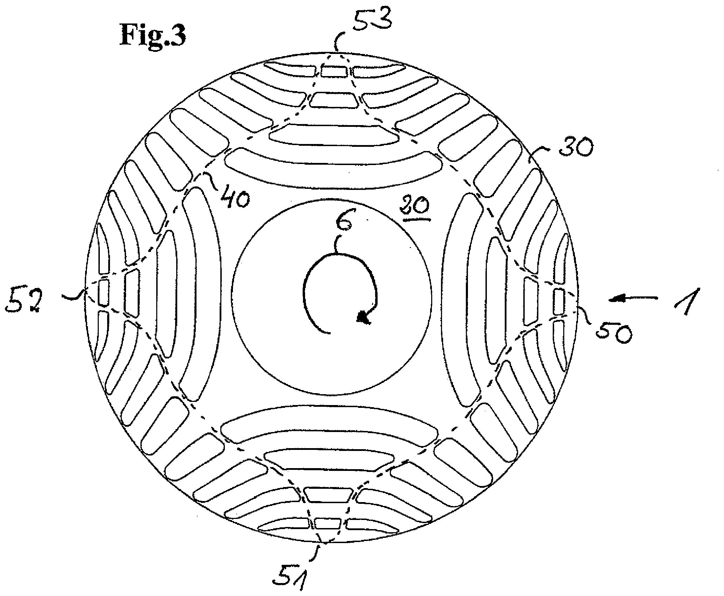

Alternative Ausgestaltungen des Rotorsblechs 1 sind den Figuren 2 und 3 zu entnehmen. Figur 2 zeigt eine quadratische Stegführung, wodurch ein quadratischer innerer Rotorbereich 20 ausgebildet wird. Der äußere Rotorbereich 30 wird durch einzelne kleine Kreissegmente 31, 32, 33 und 34 gebildet, die über die Ecken des quadratischen Rotorbereichs 20 miteinander verbunden sind. Die gestrichelte Linien 40 kennzeichnet den Grenzverlauf zwischen den Rotorbereichen 20, 30.

Figur 3 zeigt eine weitere Alternative, wobei die Stegführung einen im wesentlichen kreisförmigen inneren Rotorbereich 20 bildet, der in einzelnen Kreisabschnitten bis an den Außenumfang des Rotors herausragt. Die gestrichelte Linien 40 kennzeichnet erneut den Grenzverlauf zwischen den Rotorbereichen 20, 30. Wie in Figur 3 ersichtlich ist, weicht die Stegführung in den Punkten 50, 51, 52 und 53 von der üblichen Kreisform ab und erstreckt sich bis an den Außenumfang des Rotorblechs 1.

Zudem sind in den Ausführungsbeispielen der Figuren 2 und 3 sämtliche Flusssperren durch jeweils zwei Stege in drei Flusssperrensegmente unterteilt.

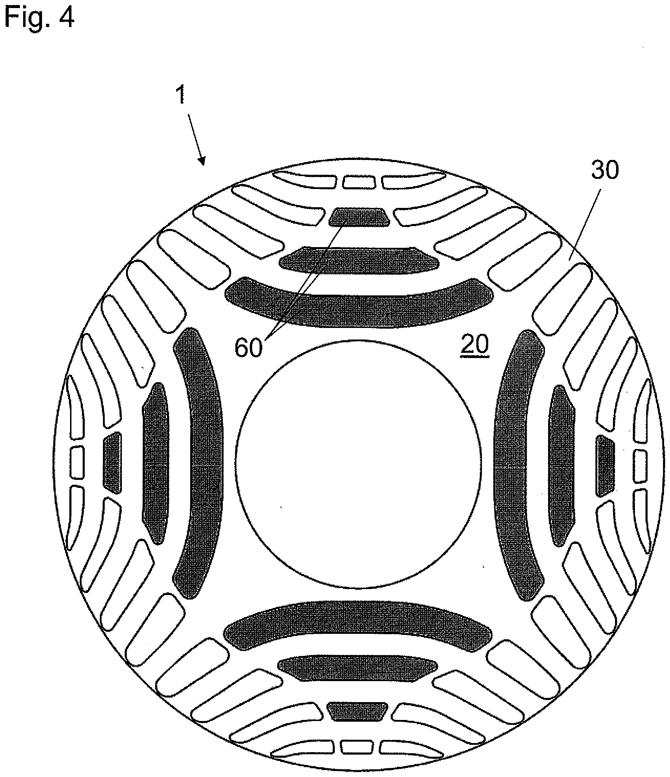

Figur 4 zeigt ein Rotorblech 1, bei dem ein Teil der inneren Flussssperren mit Permanentmagneten bzw. permanentmagnetischem Füllmaterial 60 gefüllt sind.

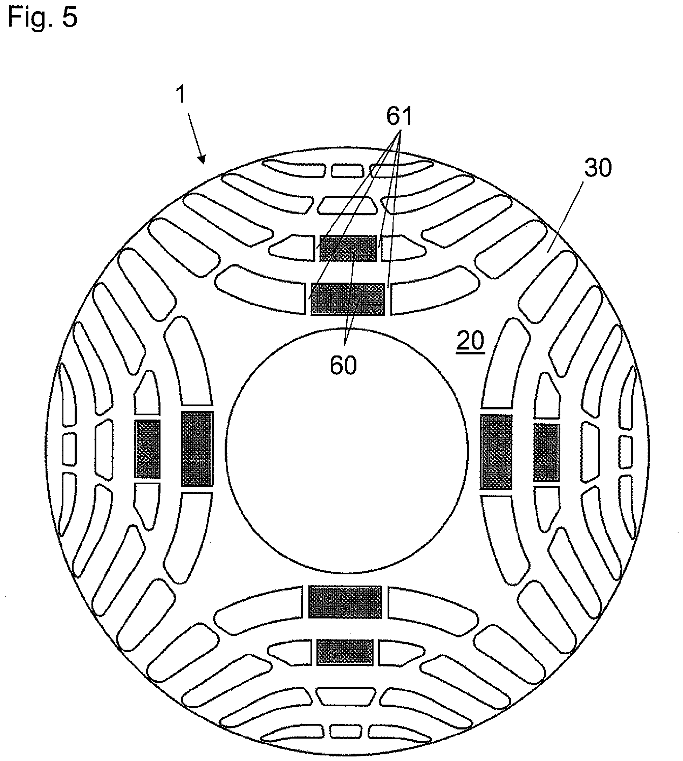

Figur 5 zeigt ein Rotorblech 1, bei dem ein Teil der inneren Flusssperren durch zusätzliche Stege 61 geteilt sind und dadurch teilweise mit Permanentmagneten bzw. permanentmagnetischem Füllmaterial 60 gefüllt sind.

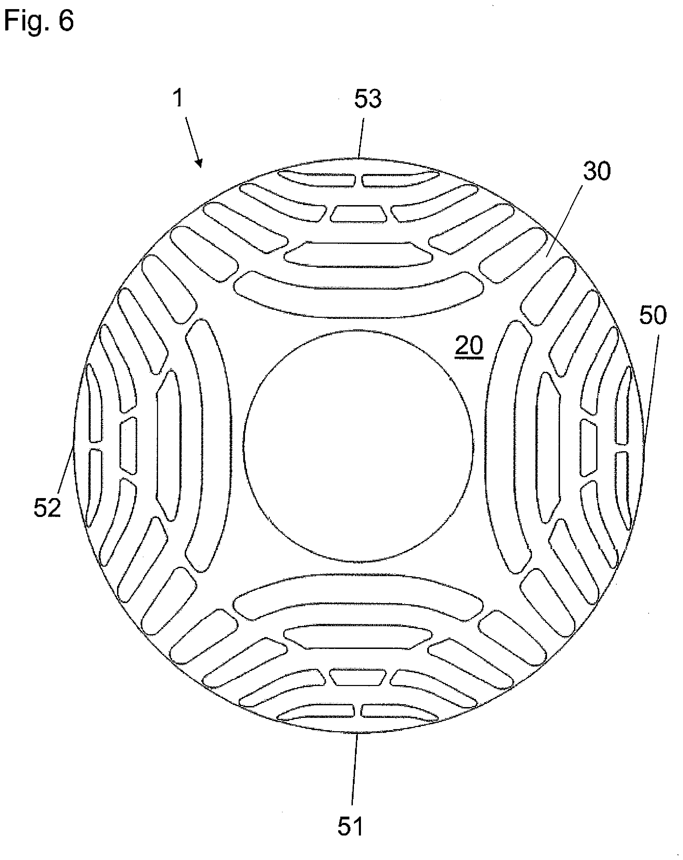

Figur 6 zeigt ein Rotorblech 1 ähnlich dem gemäß Figur 3, wobei die am Rotorumfang gelegenen Flusssperren jeweils zweigeteilt sind. In Figur 6 weicht die Stegführung in den Punkten 50, 51, 52 und 53 von der üblichen Kreisform ab und erstreckt sich bis an den Außenumfang des Rotorblechs 1.

## Patentansprüche

1. Rotor für eine Reluktanzmaschine, wobei der Rotor ein zylinderförmig aufgebautes weichmagnetisches Element umfasst,
wobei das weichmagnetische Element Aussparungen zur Ausbildung von magnetischen Flusssperren (3, 4, 5) aufweist,
wobei alle oder ein Teil der Flusssperren (3, 4, 5) durch ein oder mehrere Stege (10) geteilt sind, wobei der Verlauf der einzelnen Stege (10) einen geschlossenen Linienzug bildet, welcher den Rotor in radialer Richtung in einen inneren und einen äußeren Rotorbereich (20, 30) unterteilt,
wobei mehrere Flusssperren (3, 4, 5) des äußeren Rotorbereichs (30) mit einem elektrisch leitfähigen und magnetisch nicht leitfähigen Füllmaterial gefüllt sind und dass stirnseitig am Rotor jeweils ein Kurzschlussring angeordnet ist, wobei die Kurzschlussringe wenigstens zwei der Flusssperren (3, 4, 5) des äußeren Rotorbereichs (30) kurzschließen,
**dadurch gekennzeichnet, dass** sich alle Flusssperren (3, 4, 5) jeweils im wesentlichen bogenförmig symmetrisch um die q-Achse eines Polsegments des Rotors erstrecken.

2. Rotor nach Anspruch 1, **dadurch gekennzeichnet, dass** durchgehende Flusssperensegmente nicht bereichsübergreifend verlaufen.

3. Rotor nach einem der vorhergehenden Ansprüche, **dadurch gekennzeichnet, dass** die Stege (10) nicht oder nur teilweise in radialer Richtung orientiert sind.

4. Rotor nach einem der vorhergehenden Ansprüche, **dadurch gekennzeichnet, dass** der Stegverlauf den Rotor in einen ringförmigen inneren und äußeren Rotorbereich (20, 30) oder in einen viereckigen inneren Bereich und einen äußeren Bereich (20, 30) unterteilt.

5. Rotor nach einem der vorhergehenden Ansprüche, **dadurch gekennzeichnet, dass** der innere Bereich (20) abschnittsweise an den Rotorumfang angrenzt.

6. Rotor nach einem der vorhergehenden Ansprüche, **dadurch gekennzeichnet, dass** der Rotor eine gerade Anzahl von Polen aufweist.

7. Rotor nach einem der vorhergehenden Ansprüche, **dadurch gekennzeichnet, dass** ein oder mehrere Flusssperren (3, 4, 5) zumindest teilweise mit einem paramagnetischen oder diamagnetischen Füllmaterial ausgefüllt sind.

8. Rotor nach Anspruch 7, **dadurch gekennzeichnet, dass** das Füllmaterial ein Metalloxid oder Aluminium oder eine Aluminiumlegierung oder Kupfer oder eine Kupferlegierung oder Kunststoff oder Keramik oder ein Textil oder Holz oder ein Gemisch aus den vorgenannten Stoffen umfasst.

9. Rotor nach einem der Ansprüche 7 oder 8, **dadurch gekennzeichnet, dass** das Füllmaterial per Guss oder als Feststoff in die Flusssperren (3, 4, 5) eingebracht ist.

10. Rotor nach einem der vorhergehenden Ansprüche, **dadurch gekennzeichnet, dass** die Flusssperren (3, 4, 5) des inneren und äußeren Bereichs (20, 30) mit unterschiedlichen Füllmaterialien ausgefüllt sind.

11. Rotor nach einem der vorhergehenden Ansprüche, **dadurch gekennzeichnet, dass** die Flusssperren (3, 4, 5) des äußeren Rotorbereichs (30) zumindest teilweise mit Aluminium oder einer Aluminiumlegierung gefüllt sind.

12. Reluktanzmaschine, insbesondere Synchron-Reluktanzmotor, mit wenigstens einem Rotor gemäß einem der Ansprüche 1 bis 11, wobei die Maschine vorzugsweise keinen Frequenzumrichter umfasst.

## Claims

1. Rotor for a reluctance machine, wherein the rotor has a magnetically soft element of cylindrical construction, wherein the magnetically soft element has clearances for configuring magnetic flux barriers (3, 4, 5), wherein all or part of the flux barriers (3, 4, 5) are divided by one or a plurality of webs (10), wherein the profile of the individual webs (10) forms a solid line which in the radial direction subdivides the rotor into an inner rotor region (20) and an outer rotor region (30), wherein a plurality of the flux barriers (3, 4, 5) of the outer rotor region (30) are filled with an electrically conductive and magnetically nonconductive filler material, and that a short-circuit ring is in each case disposed on the end side of the rotor, wherein the short-circuit rings short at least two of the flux barriers (3, 4, 5) of the outer rotor region (30), **characterized in that** all flux barriers (3, 4, 5) extend in each case in a substantially arcuate manner so as to be symmetrical about the q-axis of a pole segment of the rotor.

2. Rotor according to Claim 1, **characterized in that** continuous flux barrier segments run so as not to engage across regions.

3. Rotor according to one of the preceding claims, **characterized in that** the webs (10) are not, or only in part, oriented in the radial direction.

4. Rotor according to one of the preceding claims, **characterized in that** the web profile subdivides the rotor into an annular inner rotor region (20) and outer rotor region (30), or into a quadrangular inner region (20) and an outer region (30).

5. Rotor according to one of the preceding claims, **characterized in that** the inner regions (20) in portions is contiguous to the rotor circumference.

6. Rotor according to one of the preceding claims, **characterized in that** the rotor has an even number of poles.

7. Rotor according to one of the preceding claims, **characterized in that** one or a plurality of flux barriers (3, 4, 5) is/are at least in part filled with a paramagnetic or diamagnetic filler material.

8. Rotor according to Claim 7, **characterized in that** the filler material comprises a metal oxide, or aluminium or an aluminium alloy, or copper or a copper alloy, or ceramic, or a textile, or wood, or a mixture of the aforementioned materials.

9. Rotor according to one of Claims 7 or 8, **characterized in that** the filler material is incorporated in the flux barriers (3, 4, 5) by casting or as a solid material.

10. Rotor according to one of the preceding claims, **characterized in that** the flux barriers (3, 4,5) of the inner region (20) and outer region (30) are filled with dissimilar filler materials.

11. Rotor according to one of the preceding claims, **characterized in that** the flux barriers (3, 4, 5) of the outer rotor region (30) are at least in part filled with aluminium or an aluminium alloy.

12. Reluctance machine, in particular a synchronous reluctance motor, having at least one rotor according to one of Claims 1 to 11, wherein the machine preferably does not comprise a frequency inverter.

## Revendications

1. Rotor pour une machine à réluctance, le rotor comprenant un élément magnétique doux de structure cylindrique, l'élément magnétique doux présentant des évidements afin de réaliser des dispositifs de blocage de flux magnétique (3, 4, 5), tous les dispositifs de blocage de flux (3, 4, 5) ou une partie de ceux étant divisés par une ou plusieurs barrettes (10), le tracé des barrettes individuelles (10) formant un contour polygonal fermé qui subdivise le rotor dans la direction radiale en une zone de rotor intérieure et une zone de rotor extérieure (20, 30), plusieurs dispositifs de blocage de flux (3, 4, 5) de la zone de rotor extérieure (30) étant remplis d'un matériau de remplissage électriquement conducteur et magnétiquement non conducteur, et en face avant sur le rotor, respectivement une bague court-circuitée est disposée, les bagues court-circuitées court-circuitant au moins deux des dispositifs de blocage de flux (3, 4, 5) de la zone de rotor extérieure (30),
**caractérisé en ce que** tous les dispositifs de blocage de flux (3, 4, 5) s'étendent respectivement substantiellement en forme d'arc de manière symétrique autour de l'axe q d'un segment polaire du rotor.

2. Rotor selon la revendication 1, **caractérisé en ce que** des segments de blocage de flux continus ne s'étendent pas sur plusieurs zones.

3. Rotor selon l'une quelconque des revendications précédentes, **caractérisé en ce que** les barrettes (10) ne sont pas orientées dans la direction radiale ou y sont orientées en partie seulement.

4. Rotor selon l'une quelconque des revendications précédentes, **caractérisé en ce que** le tracé des barrettes subdivise le rotor en une zone de rotor annulaire intérieure et extérieure (20, 30) ou en une zone rectangulaire intérieure et une zone extérieure (20, 30).

5. Rotor selon l'une quelconque des revendications précédentes, **caractérisé en ce que** la zone intérieure (20) est par endroits adjacente à la circonférence du rotor.

6. Rotor selon l'une quelconque des revendications précédentes, **caractérisé en ce que** le rotor présente un nombre pair de pôles.

7. Rotor selon l'une quelconque des revendications précédentes, **caractérisé en ce qu'**un ou plusieurs dispositifs de blocage de flux (3, 4, 5) sont remplis au moins partiellement d'un matériau de remplissage paramagnétique ou diamagnétique.

8. Rotor selon la revendication 7, **caractérisé en ce que** le matériau de remplissage est un oxyde métallique ou de l'aluminium ou un alliage d'aluminium ou du cuivre ou un alliage de cuivre ou de la matière plastique ou de la céramique ou un tissu ou du bois ou un mélange desdits matériaux.

9. Rotor selon l'une quelconque des revendications 7 ou 8, **caractérisé en ce que** le matériau de remplissage est introduit par coulée ou sous forme de matière solide dans les dispositifs de blocage de flux (3, 4, 5) .

10. Rotor selon l'une quelconque des revendications précédentes, **caractérisé en ce que** les dispositifs de blocage de flux (3, 4, 5) de la zone intérieure et extérieure (20, 30) sont remplis de différents matériaux de remplissage.

11. Rotor selon l'une quelconque des revendications précédentes, **caractérisé en ce que** les dispositifs de blocage de flux (3, 4, 5) de la zone de rotor extérieure (30) sont remplis au moins partiellement d'aluminium ou d'un alliage d'aluminium.

12. Machine à réluctance, en particulier moteur à réluctance synchrone, comprenant au moins un rotor selon l'une quelconque des revendications 1 a 11, la machine ne comprenant de préférence aucun convertisseur de fréquence.
